**Europäisches Patentamt**

**European Patent Office**

**Office européen des brevets**

(19)

(11) Veröffentlichungsnummer: **0 037 972**
**A1**

(12)
# EUROPÄISCHE PATENTANMELDUNG

(21) Anmeldenummer: 81102485.0

(22) Anmeldetag: 02.04.81

(51) Int. Cl.³: **B 07 C 5/34,** A 21 D 15/04

(30) Priorität: **10.04.80 DE 3013875**

(43) Veröffentlichungstag der Anmeldung: **21.10.81**
**Patentblatt 81/42**

(84) Benannte Vertragsstaaten: **AT BE CH DE FR GB IT LI NL SE**

(71) Anmelder: **Modersohn, Ernst, Tannenweg 7,**
**D-4780 Lippstadt (DE)**

(72) Erfinder: **Modersohn, Ernst, Tannenweg 7,**
**D-4780 Lippstadt (DE)**

(74) Vertreter: **Peerbooms, Rudolf, Dipl.-Phys.,**
**Postfach 200 208 Dickmannstrasse 45C,**
**D-5600 Wuppertal 2 (DE)**

(54) **Verfahren zum Pasteurisieren von Lebensmitteln, insbesondere Brot.**

(57) Die Erfindung betrifft ein Verfahren zum Pasteurisieren von wasserhaltigen, in einer aufblähbaren Umhüllung (5) verpackten Lebensmitteln, insbesondere Brotpackungen, bei welchem die Packungen nach dem Verpacken eine Aufheizstrecke (6) durchlaufen, sowie eine Vorrichtung zur Durchführung des Verfahrens.

Der Erfindung liegt die Aufgabe zugrunde, ein physikalisches Verfahren zum Konservieren von in aufblähbaren Umhüllungen abgepackten Lebensmitteln durch Wärmebehandlung anzugeben, bei welchem eine Abstimmung auf eine einerseits für die Konservierung ausreichende, für die Verpackung aber noch verträgliche Erwärmung zuverlässig vorgenommen werden kann und bei welcher schadhafte oder schadhaft gewordene Verpackungen automatisch erkannt werden.

Die Lösung dieser Aufgabe ist erfindungsgemäß dadurch erreicht, daß am Ende der Aufheizstrecke (6) das Maß der Aufblähung der Lebensmittelpackungen (3) durch Sensoren (7) erfaßt wird und Packungen, welche eine vorgesehene Aufbläh-Sollgröße nicht erreicht haben, automatisch aussortiert werden.

ACTORUM AG

## Patentanwalt
## Dipl.-Phys. Rudolf Peerbooms
Dickmannstraße 45c · Ruf (02 02) 55 61 47
## 5600 Wuppertal-Barmen

0037972

3122/EPÜ

Patentanmeldung

Anmelder : Ernst Modersohn

4780 Lippstadt

Verfahren zum Pasteurisieren von Lebensmitteln, insbesondere Brot

Die Erfindung betrifft ein Verfahren zum Pasteurisieren von wasserhaltigen, in einer aufblähbaren Umhüllung verpackten Lebensmitteln, insbesondere Brotpackungen, bei welchem die Packungen nach dem Verpacken eine Aufheizstrecke durchlaufen, sowie eine Vorrichtung zur Durchführung des Verfahrens.

Eine großräumige Vermarktung von Lebensmitteln setzt eine ausreichend lange Haltbarkeit der Lebensmittel voraus. Da eine Konservierung mittels Chemikalien zunehmend auf Bedenken stößt und beispielsweise Stückbrote überhaupt nicht mehr chemisch konserviert werden dürfen, besteht ein großes Bedürfnis nach einem geeigneten physikalischen Konservierungsverfahren. Bei der physikalischen Konservierung z.B. Pasteurisieren oder Sterilisieren oder Uperisieren werden die Lebensmittel einer Erhitzung ausgesetzt, die mittels Dampf, Infrarotstrahlung, Hochfrequenz- oder Mikrowellenstrahlung erreicht werden kann. Je nach Temperatur der Wärmebehandlung erfolgt eine Enzyminaktivierung, eine Abtötung von Mikroorganismen oder bei der Uperisation auch von Sporen, wodurch insbesondere hermetisch dicht verpackte Lebensmittel auf Monate oder Jahre hinaus haltbar gemacht werden können.

Bei der Erwärmung verpackter, wasserhaltiger Lebensmittel entsteht in der Packung jedoch ein erheblicher Dampfdruck. Um das Platzen der Verpackung auszuschließen, ist es bekannt, die Erwärmung unter Gegendruck in Autoklaven auszuführen, jedoch ist dieses Verfahren verhältnismäßig aufwendig.

Einfachere Sterilisier- und Pasteurisierungsverfahren werden unter atomsphärischen Bedingungen ausgeführt, wobei aber gerade Kunststoffverpackungen häufig durch die Hitzebehandlung defekt werden, was nicht in allen Fällen ohne weiteres erkannt werden kann. Aufblähbare Verpackungen können einerseits hermetisch dichte Verpackungen, z.B. zugeschweißte Kunststoffumhüllungen, die vornehmlich bei Vakuumverpackung eingesetzt werden, aber auch Verpackungen mit Labyrinthdichtung wie zugebundene Beutel sein.

Der Erfindung liegt die Aufgabe zugrunde, ein physikalisches Verfahren zum Konservieren von in aufblähbaren Umhüllungen abgepackten Lebensmitteln durch Wärmebehandlung anzugeben, bei welchem eine Abstimmung auf eine einerseits für die Konservierung ausreichende, für die Verpackung aber noch verträgliche Erwärmung zuverlässig vorgenommen werden kann und bei welcher schadhafte oder schadhaft gewordene Verpackungen automatisch erkannt werden.

Die Lösung dieser Aufgabe ist erfindungsgemäß dadurch erreicht, daß am Ende der Aufheizstrecke das Maß der Aufblähung der Lebensmittelpackungen durch Sensoren erfaßt wird und Packungen, welche eine vorgegebene Aufbläh-Sollgröße nicht erreicht haben, automatisch aussortiert werden.

Bei dem Verfahren nach der Erfindung wird die bisher nur als nachteilig und gefährlich angesehene Aufblähung der Verpackungen nunmehr als Überwachungs- und Steuergröße nutzbar gemacht. Beim Pasteurisieren von Lebensmitteln, z.B. Brotschnittenpackungen, lassen sich im Einzelfall leicht Erfahrungswerte ermitteln, bis zu welcher Größenänderung eine Verpackung noch gefahrlos aufgebläht werden darf, und kann zugleich eine geeignete Aufheizstrecke vorgesehen werden, welche bei dieser Aufbläh-Sollgröße eine für die Konservierung ausreichende Wärmebehandlung garantiert. Beispielsweise eignet sich für ein solches Pasteurisieren insbesondere eine Aufheizung mittels Hochfrequenz- oder Mikrowellen, die in bereits 2 bis 3 Minuten eine ausreichende Erwärmung des Nahrungsmittels von innen heraus erbringen. Das erfindungsgemäße Verfahren läßt sich sehr gut als kontinuierliches oder schrittweises Durchlaufverfahren ausführen, wobei die Verweilzeit in der Aufheizstrecke gerade so gewählt wird, daß am Ende der Aufheizstrecke normalerweise die Packungen die Aufbläh-Sollgröße erreicht haben. Von Hause aus defekte Packungen erfahren dagegen keine oder keine ausreichende Aufblähung und werden dadurch von den übrigen aussortiert. Das gleiche gilt für die Packungen, die bei Wärmebehandlung zu stark aufgebläht und geplatzt sind. Das erfindungsgemäße Verfahren bietet sowohl bei Vakuumverpackungen als auch bei labyrinthdichten Verpackungen eine sehr zuverlässige Möglichkeit zum Erkennen und Aussondern nicht einwandfrei konservierter Packungen, wenn die Umhüllung nicht mehr korrekt ist.

Der Erfindung liegt weiterhin die Aufgabe zugrunde, das Pasteurisierungsverfahren von der Anfangstemperatur der Lebensmittelpackungen unabhängig zu machen, um beispielsweise Brot noch warm vom Backvorgang pasteurisieren zu können, wobei aber je nach Dauer der Brotschneide- und Brotverpackungsprozesse die Temperaturen der einzelnen Packungen einer Backcharge beträchtlich schwanken können.

Zur Lösung dieser weiteren Aufgabe ist der Erfindung zufolge vorgesehen, daß die Packungen in einer zu einer Ausschußsammelstelle führenden Richtung in den Aufheizapparat eingeführt werden und daß die Packungen individuell bei Erreichen ihrer Aufbläh-Sollgröße aus der Aufheizstrecke herausgelenkt werden. Durch diese Maßnahmen kann insbesondere beim Abpacken von Brot erheblich Energie eingespart werden, da nunmehr beispielsweise eine gebackene und abgepackte Brotcharge noch backofenwarm, beispielsweise $40^{\circ}$ bis $50^{\circ}$ warm, in die Pasteurisierungs-Aufheizstrecke eingeführt und also mit wesentlich geringerem Energieaufwand die Pasteurisierungstemperatur, hier meist $80^{\circ}$ C, erreicht werden kann.

Zur Durchführung des Verfahrens sieht die Erfindung eine Vorrichtung mit einem die Packungen durch einen Aufheizapparat führenden Endlosförderer vor, die dadurch gekennzeichnet ist, daß am Ende des Aufheizapparates eine die Höhe der Packungen überwachende Lichtschranke und ein von der Lichtschranke gesteuerter Auswerfer für die Verpackungen von Aufbläh-Sollgröße angeordnet sind. Zweckmäßigerweise ist der Aufheizapparat nur über einer Längshälfte des Endlosförderers und der Auswerfer auf der Seite des Aufheizapparates neben dem Endlosförderer angeordnet, wobei der Auswerfer einen bis zur gegenüberliegenden Längshälfte des Förderers reichenden Schieber aufweist.

Gemäß einer speziellen Weiterbildung der Erfindung kann vorgesehen werden, daß längs der Aufheizstrecke mehrere Lichtschranken hintereinander mit jeweils einem zugeordneten Auswerfer angeordnet sind. Hierbei ist vorteilhafterweise neben dem Endlosförderer eine tiefer und außerhalb des Aufheizapparates liegende parallele Förderbahn zur Aufnahme der ausgeworfenen Verpackungen angeordnet.

Das erfindungsgemäße Verfahren bietet weiterhin noch den Vorteil, daß auf verschiedene Arten auf die Intensität der Pasteurisierung Einfluß genommen werden kann, z.B. durch den Evakuierungsgrad der Packung, durch die Dicke oder Reißfestigkeit der Verpackungshülle (Verbundfolie), durch Veränderung der Verpackungsgröße im Verhältnis zum Volumen des verpackten Lebensmittels und/oder durch Verschieben der Lichtschranke, die dem verpackten Lebensmittel ein stärkeres Aufblähen ermöglicht.

Die Erfindung wird im folgenden anhand der Zeichnung näher erläutert, in der zeigen :

0037972

Figur 1 eine Vorrichtung zum Pasteurisieren von Lebensmittelpackungen in Seitenansicht,

Figur 2 eine Draufsicht auf den unteren Teil der Vorrichtung nach Fig. 1,

Figur 3 einen Schnitt gemäß der Linie III-III in Fig. 1,

Figur 4 einen Schnitt gemäß der Linie IV-IV in Fig. 1,

Figur 5 ein zweites Ausführungsbeispiel der Vorrichtung
nach der Erfindung,

Figur 6 eine Draufsicht auf den unteren Teil der Vorrichtung nach Fig. 5 und

Figur 7 einen Schnitt gemäß der Linie VII-VII in Fig. 5.

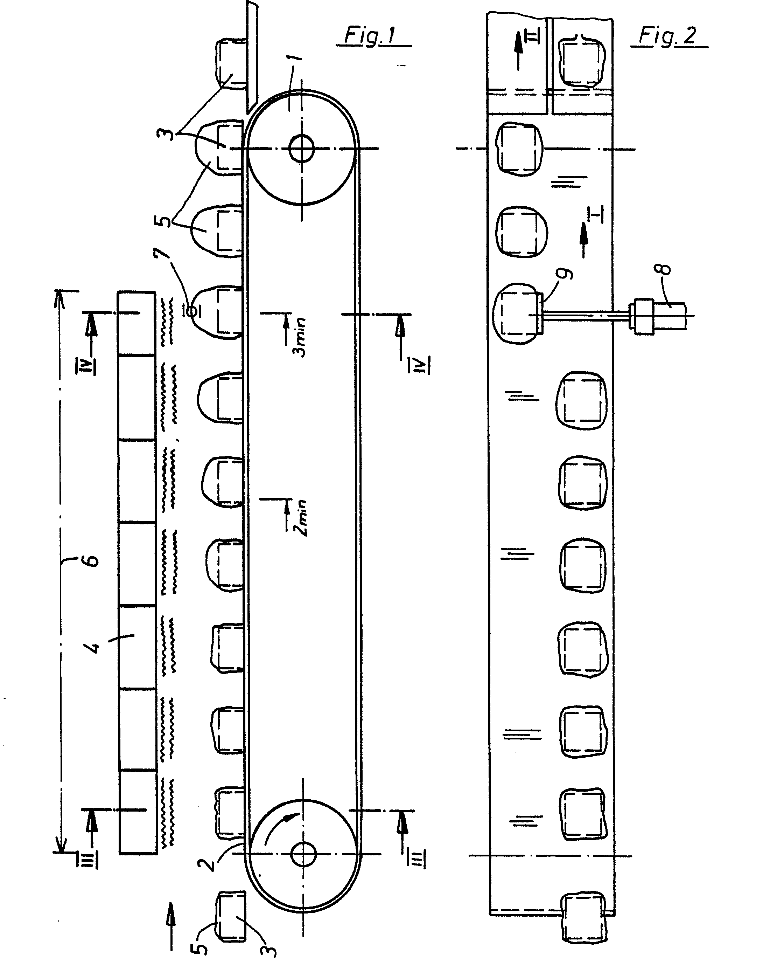

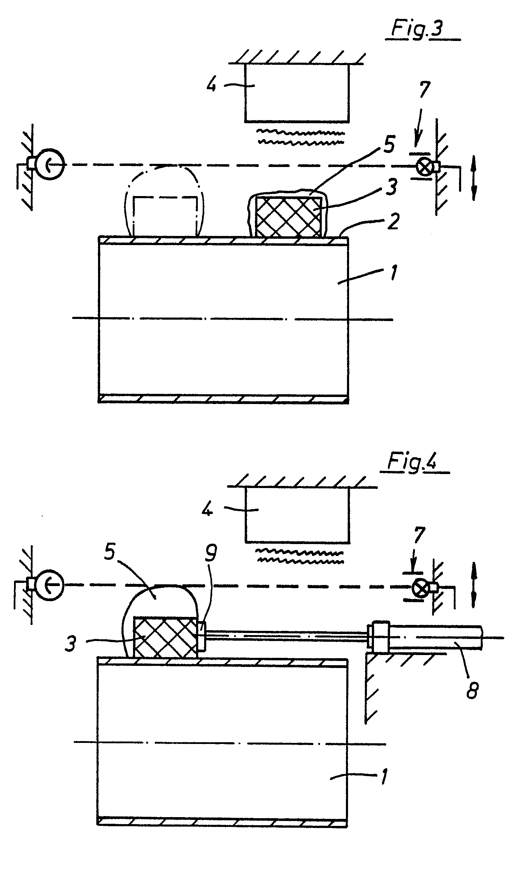

Die Pasteurisiervorrichtung nach den Fig. 1 bis 4 umfaßt einen Endlosförderer 1, auf dessen Obertrum 2 die zu
pasteurisierenden Lebensmittelpackungen 3 unter einem
Mikrowellen-Aufheizapparat 4 langsam hindurch transportiert
werden. Der Aufheizapparat 4 überdeckt nur die nach Fig. 2
rechte Längshälfte des Endlosförderers. Die Lebensmittel
sind in einer aufblähbaren, d.h. entweder hermetisch-
oder labyrinthdichten Umhüllung 5 verpackt. Längs der Aufheizstrecke 6 erfahren die Packungen 3 eine ständige Erwärmung, wodurch innerhalb der Packungen der Dampfdruck ansteigt, was eine zunehmende Aufblähung der Umhüllungen 5 zur Folge hat. Am Ende der Aufheizstrecke ist ein Sensor in Form einer Lichtschranke 7 in Höhe der Aufbläh-Mindestgröße oder Sollgröße angeordnet, welche einen seitlich neben dem Endlosförderer 1 angeordneten Auswerfer 8 steuert. Wenn eine Packung 3 bzw. deren Umhüllung 5 ausreichend hoch aufgebläht ist, spricht die Lichtschranke 7 an und löst den Auswerfer 8 aus, der mit seinem Schieber 9 die betreffende Packung aus der ursprünglichen Förderrichtung I zur Seite hin herausschiebt auf die zweite kältere Hälfte des doppelt breit ausgebildeten Endlosförderers 1, wo die ordnungsgemäß pasteurisierten Packungen über die Produktionslinie II weiterlaufen. Packungen, die keine ausreichende Aufblähung erfahren haben, laufen dagegen unter der Lichschranke 7 hindurch zu einer Ausschußsammelstelle und sind damit automatisch aussortiert.

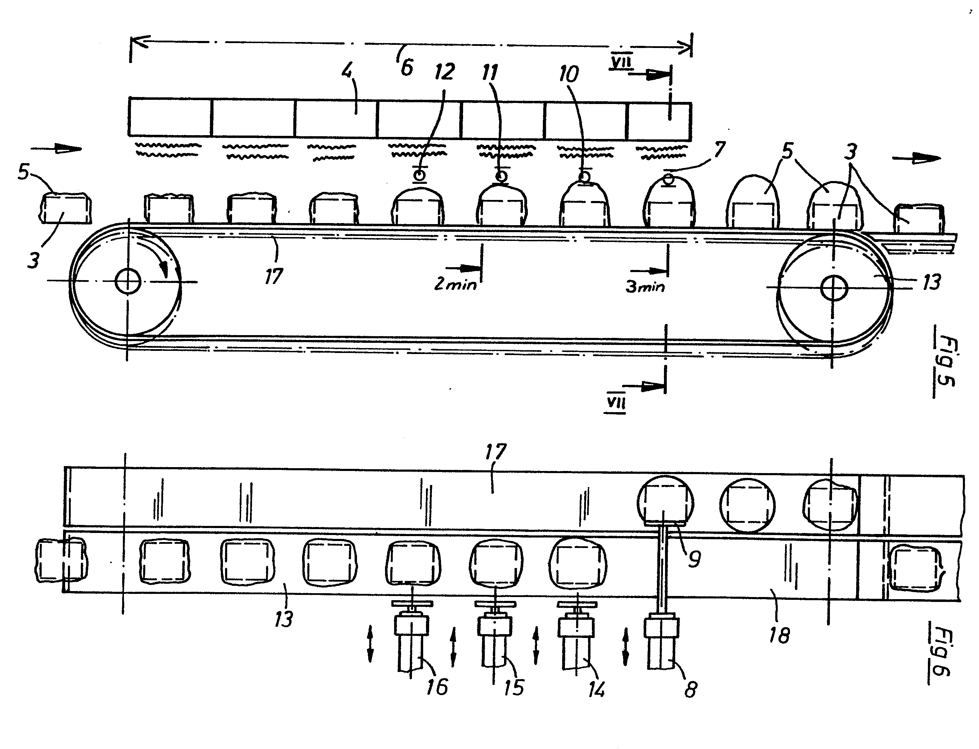

Beim Ausführungsbeispiel nach den Fig. 5 bis 7 sind längs der Aufheizstrecke 6 mehrere Lichtschranken 7, 10,11 und 12 in jeweils Aufbläh-Sollhöhe über einem Endlosförderer 13 angeordnet, über dem der Aufheizapparat 4 liegt. Jede Lichtschranke 7, 10, 11, 12 steuert jeweils einen Auswerfer 8, 14, 15, 16. Auf der den Auswerfern 8, 14, 15, 16 gegenüberliegenden Seite ist neben dem

0037972

Endlosförderer 13 ein weiterer Endlosförderer angeordnet, dessen Förderbahn 17 etwas tiefer als das
Obertrum 18 des Zufuhr-Förderers 13 liegt. In die
Vorrichtung nach den Fig. 5 bis 7 können auch
Packungen unterschiedlicher Anfangstemperatur aufgegeben werden. Sobald eine Packung die Aufbläh-
Sollgröße erreicht, wird sie über einen der Auswerfer
auf die kalte Förderbahn 17 geschoben, auf der die
Packung soviel tiefer liegt, daß sie weitere Lichtschranken nicht mehr auslöst.

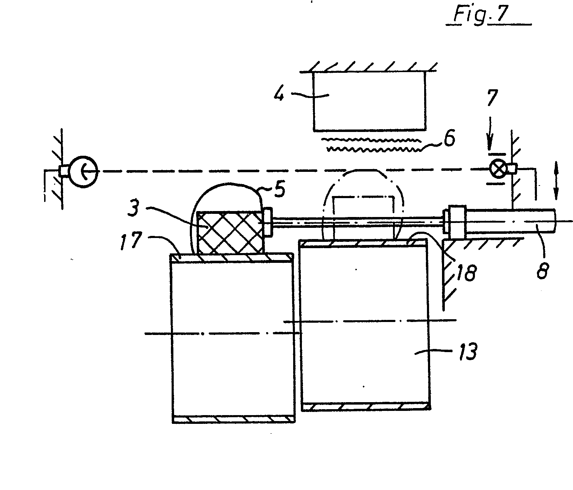

Die Erfindung ist nicht auf die dargestellten Ausführungsbeispiele beschränkt. Es kann vielmehr z.B.
bei der Ausführungsform nach den Fig. 5 und 6 statt eines
stationären Aufheizapparates vorgesehen werden, daß der
Aufheizapparat aus einer Vielzahl an einem Endlosförderer umlaufenden Hochfrequenz- oder Mikrowellenerhitzern besteht, welche längs des Untertrums auf die
zu pasteurisierenden Packungen individuell ausgerichtet sind und individuelle Abschalteinrichtungen
aufweisen, welche durch im Gleichtakt mit den Auswerfern betätigte Schaltglieder, bei Aufheizung ihrer
zugeordneten Packung auf Sollgröße, betätigt werden.
Auf diese Weise lassen sich kleine handelsübliche Erhitzer einsetzen, die durch ihre jeweilige Abschaltung
auf ihrem Rückweg längs des Obertrums gegen Überhitzung
geschützt bleiben.

Patentanwalt

# Dipl.-Phys. Rudolf Peerbooms

Dickmannstraße 45c · Ruf (02 02) 55 61 47
**5600 Wuppertal-Barmen**

Ü037972

3122/EPÜ

- 10 -

Patentansprüche

1. Verfahren zum Pasteurisieren von wasserhaltigen, in einer aufblähbaren Umhüllung verpackten Lebensmitteln, bei welchem die Lebensmittelpackungen nach dem Verpacken eine Aufheizstrecke durchlaufen, dadurch gekennzeichnet, daß am Ende der Aufheizstrecke das Maß der Aufblähung der Lebensmittelpackungen durch Sensoren erfaßt wird und daß Packungen, welche eine vorgegebene Aufbläh-Sollgröße nicht erreicht haben, automatisch aussortiert werden.

2. Verfahren nach Anspruch 1, dadurch gekennzeichnet, daß die Packungen in einer zu einer Ausschußsammelstelle führenden Richtung in den Aufheizapparat eingeführt werden und daß die Packungen individuell bei Erreichen ihrer Aufbläh-Sollgröße aus der Aufheizstrecke heraus auf eine kalte Nebenförderbahn gelenkt werden.

3. Vorrichtung zur Durchführung des Verfahrens nach Anspruch 1, mit einem, die Packungen durch einen Aufheizapparat führenden Endlosförderer, dadurch gekennzeichnet, daß am Ende des Aufheizapparates (4) eine die Höhe der Packungen (3) überwachende Lichtschranke (7) und ein von der Lichtschranke ge-

00379'72

steuerter Auswerfer (8) für die Packungen von Aufbläh-Sollgröße angeordnet sind.

4. Vorrichtung nach Anspruch 3, dadurch gekennzeichnet, daß der Aufheizapparat (4) nur über einer Längshälfte des Endlosförderers (1) und der Auswerfer (8) auf der Seite des Aufheizapparates neben dem Endlosförderer angeordnet ist und daß der Auswerfer mit seinem Schieber (9) bis zur gegenüberliegenden Längshälfte des Förderers reicht.

5. Vorrichtung nach den Ansprüchen 3 und 4, dadurch gekennzeichnet, daß der Aufheizapparat (4) ein Hochfrequenz- oder Mikrowellenerhitzer ist.

6. Vorrichtung nach den Ansprüchen 3 und 5, dadurch gekennzeichnet, daß längs der Aufheizstrecke (6) mehrere Lichtschranken ( 7, 10, 11, 12 ) mit jeweils zugeordneten Auswerfern ( 8, 14, 15, 16 ) angeordnet sind.

7. Vorrichtung nach Anspruch 6, dadurch gekennzeichnet, daß neben dem Endlosförderer (13) eine tiefer und außerhalb des Aufheizapparates (4) liegende parallele Förderbahn (17) zur Aufnahme der ausgeworfenen Packungen (3) angeordnet ist.

8. Vorrichtung nach Anspruch 6, dadurch gekennzeichnet, daß der Aufheizapparat aus einer Vielzahl an einem Endlosförderer umlaufenden Hochfrequenz- oder Mikrowellenerhitzern besteht, welche längs des Untertrums auf die zu pasteurisierenden Packungen individuell ausgerichtet sind und individuelle Abschalteinrichtungen aufweisen, welche durch im Gleichtakt mit den Auswerfern betätigte Schaltglieder, bei Aufheizung ihrer zugeordneten Packung auf Sollgröße, betätigt werden.

0037972

Fig.1

Fig.2

Ernst Modersohn

0037972

_Fig.3_

4

7

5

3

2

1

_Fig.4_

4

7

5

9

3

8

1

Ernst Modersohn

0037972

Fig 5

Fig 6

Fig. 7    0037972

Ernst Modersohn

| EINSCHLÄGIGE DOKUMENTE | | | KLASSIFIKATION DER ANMELDUNG (Int. Cl.) |
|---|---|---|---|
| Kategorie | Kennzeichnung des Dokuments mit Angabe, soweit erforderlich, der maßgeblichen Teile | betrifft Anspruch | |
| | <u>FR - A - 1 314 085</u> (OWENS ILLINOIS GLASS CIE.)<br><br>* Zusammenfassung A, 1°, 2°, 3°, 4°, 5°; Figuren 1-5; Seite 1, Spalte 1, Zeilen 10-17; Seite 1, Spalte 2, Zeilen 13-38; Seite 2, Spalte 1, Zeilen 1-42; Seite 2, Spalte 2, Zeilen 21-55 *<br><br>& DE - B - 1 240 684 | 1,3,6 | B 07 C 5/34<br>A 21 D 15/04 |
| | <u>US - A - 4 024 956</u> (B.P. CASSIDY)<br><br>* Zusammenfassung; Figuren 1-7; Spalte 1, Zeilen 6-34; Spalte 2, Zeile 42 - Spalte 3, Zeile 5; Spalte 4, Zeilen 3-17; Spalte 6, Zeile 56 - Spalte 7, Zeile 9 * | 1 | **RECHERCHIERTE SACHGEBIETE (Int. Cl.)**<br><br>A 21 D  15/04<br>15/06<br>15/00<br>B 65 B  55/14<br>55/12<br>59/02<br>A 23 L  3/04<br>3/00<br>B 07 C  5/34 |
| | <u>FR - A - 2 209 587</u> (TANABE SEIYA-KU CO. LTD. et al.)<br><br>* Ansprüche 1,3,4,7,25; Figur 1; Seite 3, Zeile 25 - Seite 8, Zeile 36 * | 1,4,5 | |
| A | <u>FR - A - 2 281 176</u> (AMERICAN CHAIN & CABLE CIE. INC.)<br><br>& DE - A - 2 535 285 | | |
| A | <u>FR - A - 1 235 397</u> (LA TERMOAERO TECHNICA INDUSTRIALE OFFICINE F. LLI PEZZERA) | | |
| A | <u>FR - A - 1 538 600</u> (RAIN JACQUEL et al.) | | |
| | <u>DE - A - 1 133 017</u> (... ...)<br>& ... ... 1 547 ... ... | | |

Der vorliegende Recherchenbericht wurde für alle Patentansprüche erstellt.

| Recherchenort | Abschlußdatum der Recherche | Prüfer |
|---|---|---|
| | | |

EPA form 1503.1   06.78

BAD ORIGINAL

Europäisches
Patentamt

# EUROPÄISCHER RECHERCHENBERICHT

Nummer der Anmeldung

0037972

| EINSCHLÄGIGE DOKUMENTE | | | KLASSIFIKATION DER ANMELDUNG (Int.Cl. ³) |
|---|---|---|---|
| Kategorie | Kennzeichnung des Dokuments mit Angabe, soweit erforderlich, der maßgeblichen Teile | betrifft Anspruch | |
| A | US - A - 4 177 620 (W.P. DALY) | | |
| | & DE - A - 2 803 035 | | |

RECHERCHIERTE SACHGEBIETE (Int. Cl. )

EPA Form 1503.2   06.78